# EUROPEAN PATENT SPECIFICATION

(11) **EP 2 123 927 B1**
(45) Date of publication and mention of the grant of the patent: **17.09.2014**
(21) Application number: 08711557.2
(22) Date of filing: 19.02.2008
(51) Int. Cl.: F16D 13/74, B62M 7/02, B62M 9/08, F16D 13/14, F16D 13/62, F16D 43/04, F16H 9/12

(54) **DRY CLUTCH AND TWO-WHEELED MOTOR VEHICLE WITH DRY CLUTCH**
TROCKENKUPPLUNG SOWIE ZWEIRÄDRIGES MOTORFAHRZEUG MIT DER TROCKENKUPPLUNG
EMBRAYAGE À SEC ET VÉHICULE À DEUX ROUES DOTÉ DE L'EMBRAYAGE À SEC

(30) Priority: 20.02.2007 JP 2007039255
(43) Date of publication of application: 25.11.2009
(73) Proprietor: Yamaha Hatsudoki Kabushiki Kaisha, Iwata-shi, Shizuoka 438-8501 (JP)
(72) Inventor: SUGITANI,Tsuyoshi, Iwata-shi Shizuoka 438-8501 (JP); TAKEBE, Mitsukazu, Iwata-shi Shizuoka 438-8501 (JP); TAKEDA, Fumio, Iwata-shi Shizuoka 438-8501 (JP); AOYAMA, Atsushi, Iwata-shi Shizuoka 438-8501 (JP); KATSUNO, Kotaro, Iwata-shi Shizuoka 438-8501 (JP)
(74) Representative: Grünecker, Kinkeldey, Stockmair & Schwanhäusser
(86) International application number: PCT/JP2008/052733
(87) International publication number: WO 2008/105264

(56) References cited:
- EP-A1- 0 731 287
- EP-A1- 1 323 942
- EP-A1- 1 564 428
- WO-A1-96/36681
- WO-A1-2006/006437
- GB-A- 575 996
- JP-A- 3 292 385
- JP-A- 8 232 981
- JP-A- 07 119 764
- JP-A- 07 167 157
- JP-A- 07 224 871
- JP-A- 08 042 604
- JP-A- 10 176 722
- JP-A- 2001 008 314
- JP-A- 2004 116 426
- JP-A- 2006 275 288
- JP-B2- 01 048 304
- JP-U- 04 028 239
- JP-U- 54 156 076
- US-A- 6 006 869

## Description

### Technical Field

The present invention relates to a dry clutch, by which a transmitting member and a transmitted member are caused to contact with or separate from each other whereby motive power is transmitted or cut off, a transmitting member and a transmitted member, which constitute a part of the dry clutch, and a motorcycle provided with the dry clutch. A dry clutch according to the preamble of claim 1 is known from JP 54 156 076 U.

### Background Art

For example, scooter type motorcycles are generally constructed such that a unit swing type engine unit provided with an engine body and a V-belt continuously variable transmission is supported by a body frame to be able to swing vertically.

With such V-belt continuously variable transmission, a V-belt is wound round a drive pulley connected to a crank shaft and a driven pulley connected to a rear wheel shaft and a dry clutch is arranged on a side of the driven pulley to transmit engine motive power to the rear wheel or cut off the engine motive power.

Conventionally, a dry clutch of this kind is described in JP-A-7-119764. With this conventional dry clutch, a clutch shoe is arranged on a side of a transmitting shaft, to which engine motive power is transmitted at all times, a clutch drum is arranged on a side of a transmitted shaft connected to a rear wheel side, and a centrifugal force generated by rotation of the transmitting shaft is made use of to cause the clutch shoe to abut against the clutch drum whereby engine motive power is transmitted to the rear wheel.

By the way, the conventional dry clutch described above involves a problem that fluctuation in rotation of a crank shaft, which is caused by reciprocation of a piston, is transmitted to the clutch drum from the clutch shoe and the fluctuation in rotation is transmitted as vibrations of a vehicle body to a rider. Such vibrations are liable to be generated, in particular, in a state in which a clutch shoe is new, and in a state in which complete connection of a clutch is not accomplished at the time of acceleration and deceleration of a vehicle, and an improvement in this respect is demanded.

The invention has been thought of in view of the conventional situation and has as its object to provide a dry clutch capable of inhibiting fluctuation in rotation of an engine from being transmitted to a rider through a vehicle body, a transmitting member and a transmitted member, which constitute a part of the dry clutch, and a motorcycle provided with the dry clutch.
Such an object is achieved by a dry clutch according to claim 1.

### Summary

The invention provides a dry clutch, which comprises a transmitting member and a transmitted member and causes the transmitting member and the transmitted member to contact with or separate from each other in a non-lubricating atmosphere whereby motive power is transmitted or cut off, and in which a solid lubricant is interposed between the transmitting member and the transmitted member, wherein the solid lubricant contains a material contained in the transmitting member or the transmitted member.

With a dry clutch according to the invention, since a solid lubricant is interposed between a transmitting member and a transmitted member, the solid lubricant decreases fluctuation in rotation transmitted to the transmitted member from the transmitting member, so that torque is smoothly transmitted. Thereby, by adopting the dry clutch for a transmission of, for example, a motorcycle, fluctuation in rotation of an engine can be absorbed by the solid lubricant whereby it is possible to prevent the fluctuation in rotation from being transmitted to a rider through a vehicle body.

### Brief Description of the Drawings

Fig. 1 is a side view showing a motorcycle provided with a dry clutch according to a first embodiment of the invention.
Fig. 2 is a side view showing an engine unit mounted on a body frame of the motorcycle.
Fig. 3 is a cross sectional view showing a support of the body frame for the engine unit.
Fig. 4 is a plan view showing, in partial cross section, the engine unit.
Fig. 5 is a side view showing a V-belt continuously variable transmission of the engine unit.
Fig. 6 is a cross sectional view showing the V-belt continuously variable transmission, in which a centrifugal clutch is arranged.
Fig. 7 is a side view showing the centrifugal clutch as viewed from inside.
Fig. 8 is a cross sectional view showing a rear end of the engine unit.
Fig. 9 is a characteristic diagram indicating the relationship between clutch rotating speed and clutch transmission torque.
Fig. 10 is a cross sectional view showing a dry clutch according to a second embodiment of the invention.
Fig. 11 is a cross sectional view showing a dry clutch according to a third embodiment of the invention.

### Description of Reference Numerals and Signs

1: motorcycle, 2: body frame, 8: engine unit, 8a: engine body, 8b: transmission case, 17: V-belt continuously variable transmission, 40: drive pulley, 41: driven pulley, 42: V-belt, 60, 75, 85: dry clutch, 62: clutch drum (transmitted member), 66: clutch shoes (transmitting members), 67: coil spring (elastic body), 68: friction plate, 70: solid lubricant, 78, 87a: outer plate (transmitting member), 81, 89a: inner plate (transmitted member), 91: clutch spring (elastic body)

### Detailed Description

Embodiments of the invention will be described below with reference to the accompanying drawings.

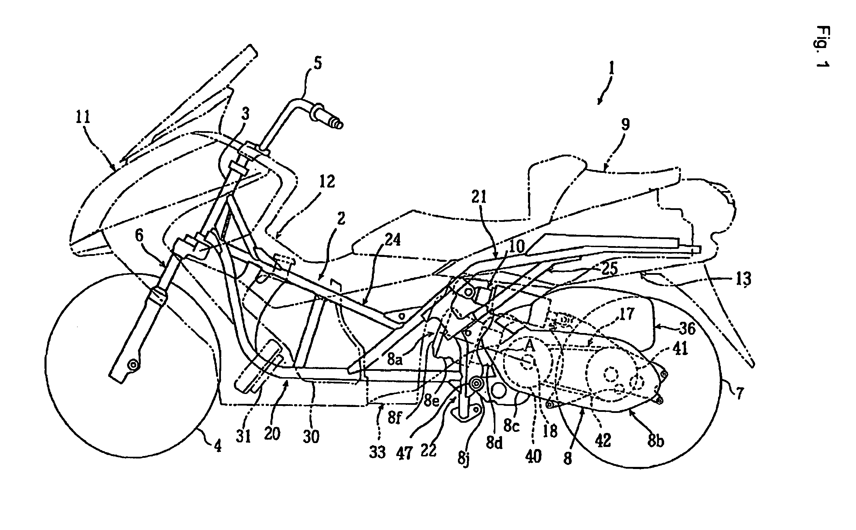

Figs. 1 to 8 are views illustrating a motorcycle 1 provided with a dry clutch according to a first embodiment of the invention. In addition, front and rear, and left and right referred to in the description of the embodiment mean front and rear, and left and right in a state of being seated on a seat.

In the drawings, the reference numeral 1 denotes a scooter type motorcycle. As shown in Fig. 1, the motorcycle 1 comprises an underbone type body frame 2, a front fork 6, a unit swing type engine unit 8, and a seat 9. The front fork 6 is supported by a head pipe 3 positioned at a front end of the body frame 2 to be steerable left and right. A front wheel 4 is arranged at a lower end of the front fork 6 and a steering handle 5 is arranged at an upper end thereof. A front portion of the engine unit 8 is supported on the body frame 2 to be able to swing vertically and a rear wheel 7 is arranged at a rear end of the engine unit 8. The seat 9 is a saddle-type double ride seat mounted above the engine unit 8 on the body frame 2.

A front side of the front fork 6 is covered by a front cover 11. A rear side of the front fork 6 is covered by a leg shield 12. A lower periphery of the seat 9 is covered by a side cover 13. Also, a low floor foot board (not shown) is arranged between the leg shield 12 and the side cover 13.

The body frame 2 includes left and right downtubes 20, left and right seat rails 21, and left and right engine suspension frames 22. The left and right downtubes 20 extend rearwardly downwardly diverging outwardly of the head pipe 3 in a vehicle width direction and extend rearward and substantially horizontally therefrom. The left and right seat rails 21 extend rearwardly and obliquely upwardly of intermediate portions of the left and right downtubes 20 and further extend rearward and substantially horizontally. The left and right engine suspension frames 22 extend vertically from rear ends of the left and right downtubes 20 and have upper ends thereof connected to the left and right seat rails 21.

Also, the body frame 2 includes left and right upper tubes 24, left and right seat stays 25, and a cross member (not shown). The left and right upper tubes 24 extend rearward and substantially straight from the head pipe 3 and have rear ends thereof connected to the left and right seat rails 21. The left and right seat stays 25 connect between the left and right engine suspension frames 22 and the seat rails 21. The cross member connects between the vicinities of connections of the left and right seat rails 25 to the engine suspension frames 22 in the vehicle width direction.

A rear suspension 10 is interposed between the cross member 23 and the engine unit 8. Also, a storage box 33 is arranged below the seat 9 on the body frame 2. A fuel tank 30 is arranged in front of the storage box 33 and a radiator 31 is arranged below the fuel tank 30.

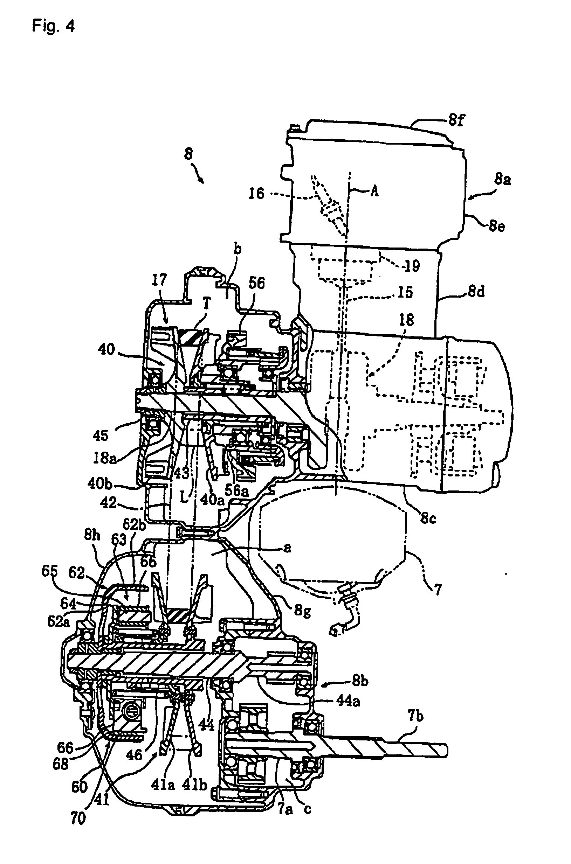

The engine unit 8 is constructed such that an engine body 8a and a transmission case 8b are joined integrally. As shown in Fig. 4, the transmission case 8b includes a transmission accommodating chamber a, in which a V-belt continuously variable transmission 17 is accommodated.

As shown in Fig. 1, the engine unit 8 has a lower portion of the engine body 8a supported directly on the body frame 2 to be able to swing, and is constructed in detail as follows.

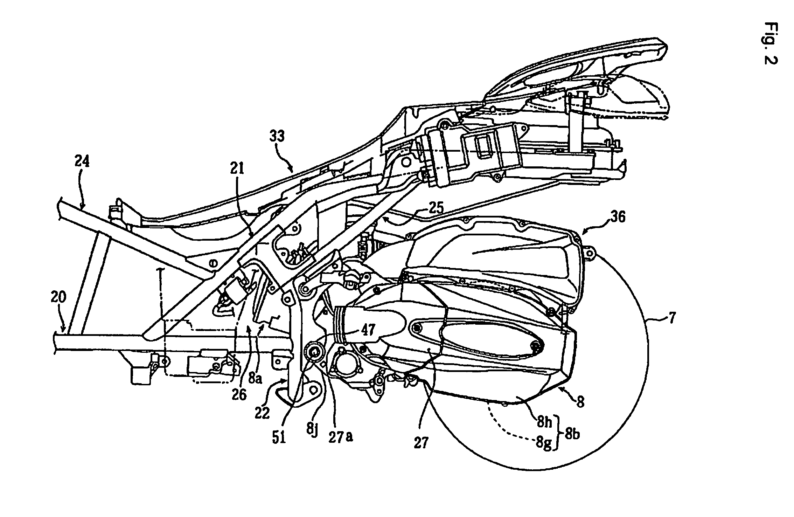

As shown in Fig. 2, pivot members 47 are arranged in the vicinity of connections of the left and right engine suspension frames 22 to the downtubes 20. The pivot members 47 are arranged to have axes thereof directed in the vehicle width direction. A pivot shaft 51 is inserted into the left and right pivot members 47.

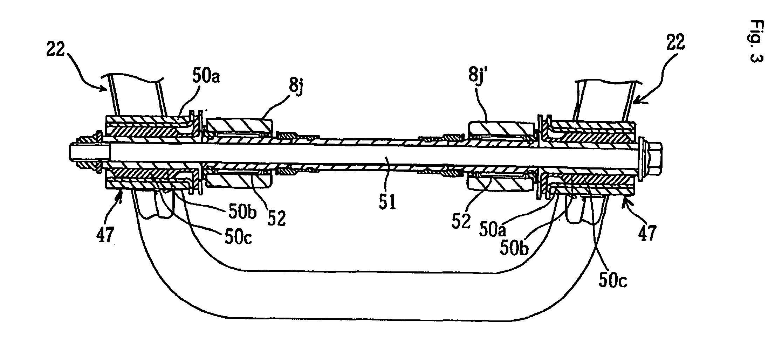

The left and right pivot members 47 include outer cylinders 50a fixed to the engine suspension frames 22 and inner cylinders 50b, into which the pivot shaft 51 is inserted, as shown in Fig. 3. Rubber bushes 50c are fixed between the outer cylinders 50a and the inner cylinders 50b as by baking or the like.

As shown in Fig. 1, a pair of left and right suspension arm portions 8j are formed integrally on a bottom wall of a crank case 8c of the engine body 8a in a manner to project forward. As shown in Fig. 3, the left and right suspension arm portions 8j are arranged inside the left and right pivot members 47 on the pivot shaft 51. The suspension arm portions 8j are supported through bearings 52 on the pivot shaft 51 to be able to turn.

The engine body 8a comprises a water-cooling type four-stroke single cylinder engine mounted with a cylinder axis A directed substantially horizontally. A cylinder block 8d, in which a piston 19 (see Fig. 4) is accommodated slidably, is joined to a front mating surface of the crank case 8c, in which a crank shaft 18 extending in the vehicle width direction is accommodated. A cylinder head 8e, in which an ignition plug 16, an intake cam shaft (not shown), and an exhaust cam shaft (not shown) are arranged, is joined to a front mating surface of the cylinder block 8d. A head cover 8f is mounted to the cylinder head 8e. As shown in Fig. 4, the piston 19 is connected to the crank shaft 18 through a connecting rod 15.

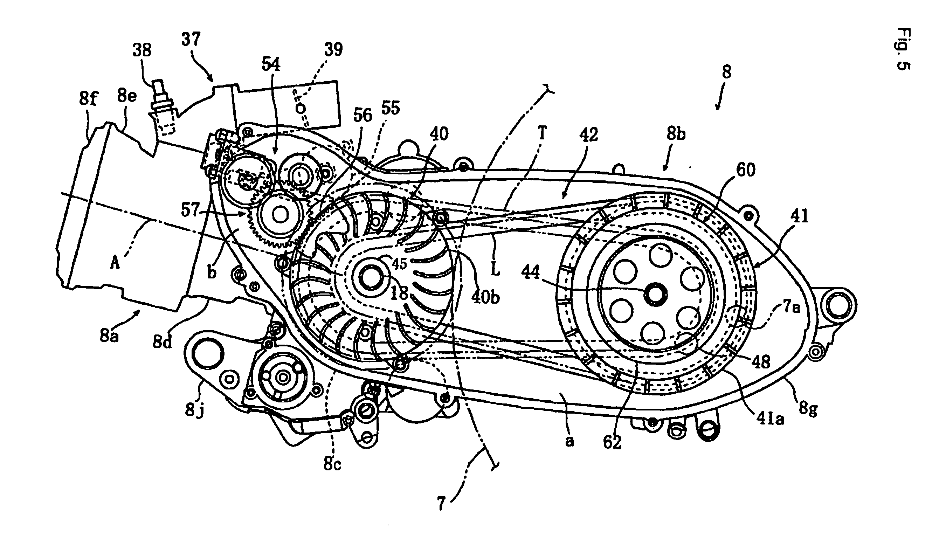

As shown in Fig. 5, an intake pipe 37 communicated to an intake port is connected to an upper wall surface of the cylinder head 8e. A fuel injection valve 38 is mounted to a downstream end of the intake pipe 37 and a throttle valve 39 is arranged on an upstream side of the fuel injection valve 38 on the intake pipe 37. An upstream end of the intake pipe 37 is connected to an air cleaner 36 (see Fig. 1) arranged on and fixed to an upper wall surface of the transmission case 8b.

As shown in Fig. 4, the transmission case 8b includes a case body 8g formed integrally in a manner to extend rearwardly and contiguous to a left wall of the crank case 8c and a case cover 8h mounted detachably to a left mating surface of the case body 8g.

A cooling-air leading duct 27 (see Fig. 2) including a cooling-air leading inlet 27a opened toward a vehicle front is mounted detachably to an outside of the case cover 8h. A travel wind inflowing from the cooling-air leading inlet 27a flows rearward in the transmission accommodating chamber a from a front end of the transmission case 8b. The travel wind is exhausted outside a rear end of the transmission case 8b while cooling a drive pulley 40, a driven pulley 41, and a V-belt 42, which are described later.

As shown in Fig. 4, the V-belt continuously variable transmission 17 includes the drive pulley 40 mounted to an axially left end 18a of the crank shaft 18, which projects into the transmission case 8b, the driven pulley 41 arranged at the rear end of the transmission case 8b, and the V-belt 42 wound round the drive pulley 40 and the driven pulley 41.

The drive pulley 40 includes a cylindrical-shaped drive shaft member 43 spline-fitted so as to rotate with the crank shaft 18, a moving sheave 40a mounted axially movably to the drive shaft member 43 to rotate with the drive shaft member 43, and a stationary sheave 40b fixed axially immovably to the left end 18a of the crank shaft 18 by a lock nut 44.

The driven pulley 41 includes a cylindrical-shaped driven shaft member 46 mounted rotatably to a rotating shaft 44 journaled by the transmission case 8b, a stationary sheave 41b fixed axially immovably to the driven shaft member 46 to rotate with the same, and a moving sheave 41a mounted axially movably to the driven shaft member 46 to rotate with the stationary sheave 41b.

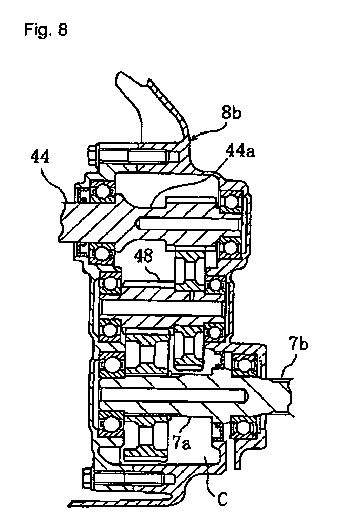

A right end 44a of the rotating shaft 44 is inserted into a gear chamber c formed independently of the transmission accommodating chamber a of the transmission case 8b. As shown in Fig. 8, an intermediate reduction shaft 48 and a rear-wheel shaft 7a are arranged in parallel to the rotating shaft 44 within the gear chamber c. A right end 7b of the rear-wheel shaft 7a projects inside from the transmission case 8b and the rear wheel 7 (see Fig. 4) is mounted to the right end 7b.

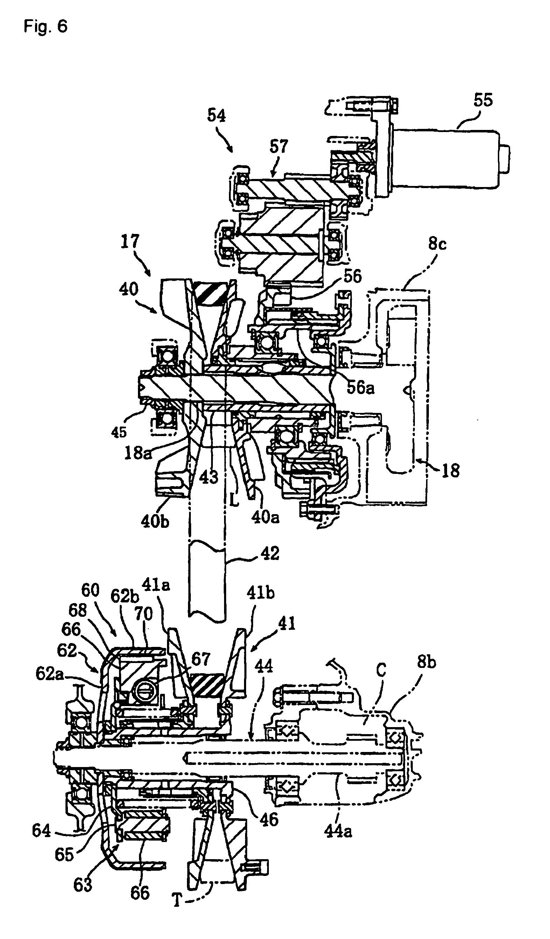

As shown in Fig. 6, the V-belt continuously variable transmission 17 comprises a wound diameter varying device 54. The wound diameter varying device 54 is controlled by a controller (not shown) to variably control a belt wound diameter of the drive pulley 40 between Low position L and Top position T on the basis of engine rotating speed, vehicular speed, etc. The wound diameter varying device 54 is arranged in a wound diameter control chamber b, which is formed bulgingly on the front end of the transmission case 8b to be directed forwardly obliquely and upwardly.

The wound diameter varying device 54 includes a drive motor 55, a reciprocatory drive gear 56, which moves the moving sheave 40a of the drive pulley 40 axially to vary a belt wound diameter, a reduction gear group 57, which transmits rotation of the drive motor 55 to the reciprocatory drive gear 56, and a feed screw member 56a, which converts rotation of the reciprocatory drive gear 56 into axial movements of the moving sheave 40a. When the reciprocatory drive gear 56 is rotated, the feed screw member 56a together with the moving sheave 40a is axially moved by a distance corresponding to rotation of the drive motor 55 whereby a wound diameter is varied.

A dry clutch 60 is mounted outwardly of the driven pulley 41 on the rotating shaft 44 in the transmission accommodating chamber a of the transmission case 8b. The dry clutch 60 includes a clutch body (transmitting member) 63 fixed so as to rotate with the driven shaft member 46 and a clutch drum (transmitted member) 62 fixed by a lock nut so as to rotate with the rotating shaft 44.

The clutch drum 62 is substantially bowl-shaped to be opened inward in the vehicle width direction. The clutch drum 62 includes a disk portion 62a fixed to the rotating shaft 44 and a cylindrical-shaped portion 62b extending inward from an outer peripheral edge of the disk portion 62a. The clutch body 63 is arranged in the cylindrical-shaped portion 62b.

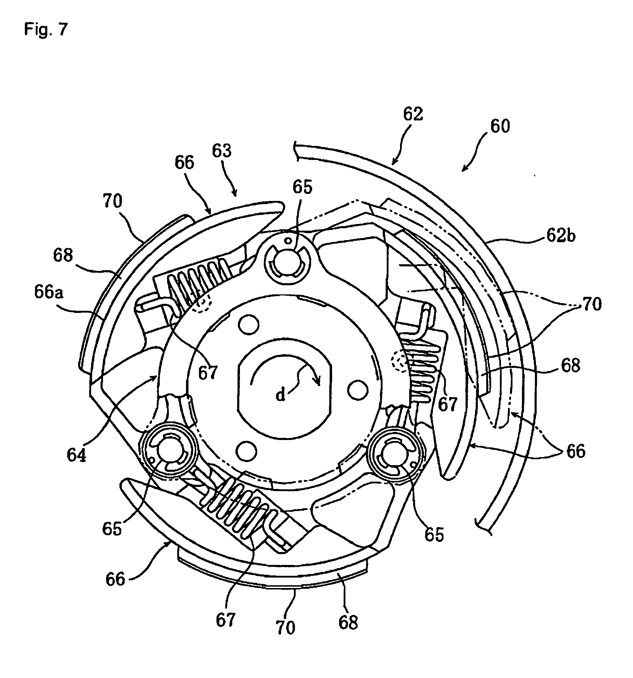

The clutch body 63 includes a clutch plate 64 fixed to the driven shaft member 46 and three support pins 65 arranged at predetermined angular intervals circumferentially of the clutch plate 64. As shown in Fig. 7, the clutch body 63 includes clutch shoes (transmitting members) 66, coil springs 67, and friction plates 68. The clutch shoes 66 are rotatably supported by the respective support pins 65 to extend from the support pins 65 in a rotating direction d of the driven pulley 41. The coil springs 67 are arranged to connect between intermediate portions of the respective clutch shoes 66 and the support pins 65 on the clutch plate 64 to bias the clutch shoes 66 radially inward (direction of separation). The friction plates 68 are adhesively fixed to outer peripheral surfaces 66a of the respective clutch shoes 66.

When the engine is driven, engine rotation from the engine body 8a is transmitted to the driven shaft member 46 through the V-belt 42. When a centrifugal force by rotation of the driven shaft member 46 becomes larger than the bias of the coil springs 67, the respective clutch shoes 66 turn radially outward about the support pins 65 and the friction plates 68 on the clutch shoes 66 abut against an inner peripheral surface of the cylindrical-shaped portion 62b of the clutch drum 62. Thereby, the clutch drum 62 is rotated and rotation of the clutch drum 62 is transmitted to the rear wheel 7 from the rotating shaft 44. When a centrifugal force by the engine rotation becomes smaller than the bias of the coil springs 67, the respective clutch shoes 66 separate from the clutch drum 62 and transmission of engine motive power to the rear wheel 7 is cut off.

With the dry clutch 60 according to the embodiment, a solid lubricant 70 is interposed between the inner peripheral surface of the cylindrical-shaped portion 62b of the clutch drum 62 and outer surfaces of the friction plates 68 on the clutch shoes 66. The solid lubricant 70 is composed of carbon powder having a low coefficient of friction and, more specifically, arranged on the outer surfaces of the friction plates 68, that is, those surfaces, which contact with the inner peripheral surface of the cylindrical-shaped portion 62b of the clutch drum 62. Specifically, the solid lubricant 70 is formed by rubbing a carbon rod, which is formed by mixing carbon powder in clay or the like, against the outer surfaces of the friction plates 68, and in the form of power film or powder layer. In addition, more specifically, the solid lubricant 70 can be formed by rubbing a soft lead, such as 2B, etc., of a pencil. Thereby, the friction plates 68 on the respective clutch shoes 66 can contact through the solid lubricant 70 with the clutch drum 62.

According to the embodiment, since the solid lubricant 70 is interposed between the clutch drum 62 and the respective clutch shoes 66 on the dry clutch 60, the solid lubricant 70 decreases fluctuation in rotation transmitted to the clutch drum 62 from the clutch body 63, so that smooth torque transmission is achieved. Thereby, fluctuation in rotation of the engine body 8a is absorbed by the solid lubricant 70, so that it is possible to inhibit the fluctuation in rotation from being transmitted to a rider through a vehicle body.

Generally, the friction plates 68 on the clutch shoes 66 are formed by combining a lining agent having a low coefficient of friction and a lining agent having a high coefficient of friction or mixing them. On the other hand, in the case where friction plates 68 are new as in a new vehicle or the like, a clutch drum 62 and friction plates 68 are hard to fit together in the initial stage of driving. Therefore, until friction plates 68 fit to a clutch drum 62, fluctuation in rotation of an engine is liable to transmit to a rear wheel side as it is. In contrast, according to the embodiment, the solid lubricant 70 is interposed between contact surfaces, so that the friction plates 68 and the clutch drum 62 are liable to fit together even in the initial stage of driving and the friction plates 68 themselves fit to the clutch drum 62 when running-in terminates.

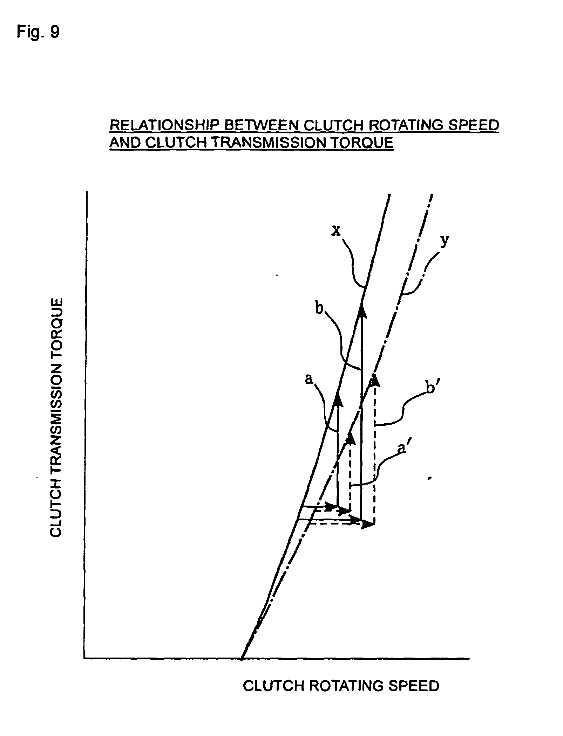

Fig. 9 is a characteristic diagram indicating the relationship between clutch rotating speed (rpm) and clutch transmission torque (N·m). In the figure, a curve x indicates a torque transmission curve when the friction plates 68 are in a state of being new. On the other hand, a curve y indicates a torque transmission curve in the case where the solid lubricant 70 is interposed. Since the torque transmission curve x in case of the friction plates 68 being new rises steeply, changes a and b in transmission torque are large relative to changes in clutch rotating speed. Therefore, when fluctuation in clutch rotation increases, fluctuation in transmission torque also increases, which is responsible for body vibrations. In contrast, since the torque transmission curve y in the case where the solid lubricant 70 is interposed rises relatively gently, changes a' and b' in transmission torque are comparatively small relative to changes in clutch rotating speed. Accordingly, even when the friction plates 68 are in a state of being new, fluctuation in transmission torque can be decreased relative to fluctuation in rotation whereby it is possible to reduce body vibrations.

According to the embodiment, since the solid lubricant 70 is formed by rubbing carbon against the friction plates 68, a solid lubricant film or a solid lubricant layer having a low coefficient of friction can be formed readily from a material which is relatively low in cost. For example, a method of heat hardening after a coating agent such as a resin or the like having a low coefficient of friction is coated involves a problem that a heating apparatus is necessary and heating time of 1 to 2 hours is necessary, which leads to an increase in cost.

Here, as in the embodiment, in the case where the engine unit 8 is supported on the body frame 2 directly, that is, without any linkage or the like therebetween, to be able to swing vertically, there is caused a problem that fluctuation in engine rotation becomes fluctuation in transmission torque to be liable to be transmitted to a rider. According to the embodiment, however, since the solid lubricant 70 is interposed in the dry clutch 60, it is possible to suppress body vibrations. As a result, it is possible to enjoy an advantage in the case where the engine unit 8 is supported directly on the body frame 2, for example, an advantage that it is possible to heighten a feeling of directness at the start or at the time of acceleration.

The embodiment has been described taking as an example the case where carbon is rubbed against the friction plates 68 as the solid lubricant 70. Here, specific examples of carbon are not specifically limitative but it is possible to use, for example, graphite, diamond powder, fine ceramic powder, or the like. Also, specific examples of the solid lubricant 70 are not limited to carbon. For example, soft metals such as gold, silver, copper, zinc, lead, or the like can also be used as the solid lubricant 70. Also, sulfide such as molybdenum disulfide, tungsten disulfide, or the like can also be used as the solid lubricant 70. Also, fluorides such as carbon fluoride, fluorocarbon resin (for example, Teflon (trade mark)), or the like may be used as the solid lubricant 70. Also, organic compounds such as selenium·telluride, halide, nylon, or the like, nitrides such as boron nitride, or the like, metallic oxides such as lead oxide, complex oxides such as CaF₂ + BaF₂ + Ag, or the like can also be used as the solid lubricant 70. Preferably, the solid lubricant 70 is a solid lubricant including carbon or molybdenum. Graphite, molybdenum disulfide, and fluorocarbon resin are preferable as the solid lubricant 70.

In the case where molybdenum disulfide or graphite is used to interpose a solid lubricant, a solid lubricant can be interposed by coating, for example, molybdenum disulfide, or dissolving graphite in an organic solvent to accomplish brush coating thereof. In this manner, in case of adopting molybdenum disulfide or graphite, the same effect as that in the embodiment is produced.

In addition, the solid lubricant 70 contains a material contained in transmitting members (in the embodiment, the clutch shoes 66) or transmitted member (in the embodiment, the clutch drum 62) of the dry clutch 60. For example, in the case where carbon is contained in a lining agent of the friction plates 68, it is preferable to use carbon as the solid lubricant 70. The reason for this is as follows.

That is, it is thought that one of the reasons why the friction plates 68 and the clutch drum 62 fit to each other when a certain duration of service lapses is that surfaces of the friction plates 68 abrade whereby carbon contained in a lining agent of the friction plates 68 is exposed to the surfaces. Hereupon, carbon can be arranged on the surfaces of the friction plates 68 even in a non-used state by beforehand rubbing carbon against the surfaces of the friction plates 68 as the solid lubricant 70. In other words, it is possible to expose carbon to the surfaces of the friction plates 68 even in a non-used state. Accordingly, a state like a state after use can be brought about even in a non-used state, so that it is possible to fit the friction plates 68 and the clutch drum 62 to each other. Also, since compatibility of materials between the solid lubricant 70 and the friction plates 68 is good, it is possible to avoid adverse influences produced by interference of materials between the solid lubricant 70 and the friction plates 68 after abrasion.

In addition, the non-used state means a so-called new product and means a state in which the dry clutch 60 is not used. When a certain duration of service lapses, carbon contained in the friction plates 68 is exposed to the surfaces and so there is a fear that it is indefinite whether carbon has been contained in a solid lubricant put in a non-used state. However, for example, the following method is used to enable specifying whether carbon has been contained in a solid lubricant put in a non-used state. That is, normally, contact surfaces of the clutch drum 62 and the friction plates 68 do not contact together wholly but such contact surfaces include actually contacted portions and actually non-contacted portions in a mixed configuration when seen locally. Hereupon, when the solid lubricant present on surfaces of the non-contacted portions is analyzed and it is found that carbon is contained in the solid lubricant, it is possible to specify that carbon is contained in the solid lubricant in a non-used state.

In addition, while the solid lubricant 70 is formed on the outer surfaces of the friction plates 68 on the clutch shoes 66 in the embodiment, it may be formed on the inner peripheral surface of the clutch drum 62. In this case, the solid lubricant 70 may contain a material contained in the dry clutch 60. Also, the solid lubricant 70 may contain a material contained in the inner peripheral surface of the clutch drum 62.

Also, a supply hole or the like (not shown) may be formed on the rotating shaft 44 to afford supplying a solid lubricant between the friction plates 68 on the clutch shoes 66 and the clutch drum 62 through the rotating shaft 44 from outside. That is, a solid lubricant may be supplied to contact surfaces of transmitting members or contact surfaces of transmitted member of the dry clutch.

The embodiment has been described taking as an example a scooter type motorcycle, in which the engine unit 8 is supported directly on the body frame 2 to be able to swing vertically. However, the invention is of course applicable to an arrangement, in which a linkage or the like is interposed in supporting an engine unit on a body frame to enable the same to swing vertically.

While the embodiment has been described taking as an example a scooter type motorcycle, in which the engine unit 8 is supported by the body frame 2 to be able to swing vertically, the invention is also applicable to a motorcycle, in which an engine unit is fixedly mounted on a body frame. In other words, the invention is also applicable to a motorcycle, in which an engine unit is supported on a body frame to be able to swing substantially vertically, or to be unable to rotate. Furthermore, the invention is also applicable to a dry clutch mounted on an automobile, etc.

The embodiment has been described with respect to the dry clutch 60 comprising the clutch shoes 66 and the clutch drum 62. That is, with the dry clutch 60, the clutch shoes 66 are brought into contact with the clutch drum 62 by a centrifugal force generated by rotation of the driven pulley 41 and the clutch shoes 66 are separated from the clutch drum 62 by the bias of the coil springs 67. However, the dry clutch according to the invention is not limited thereto.

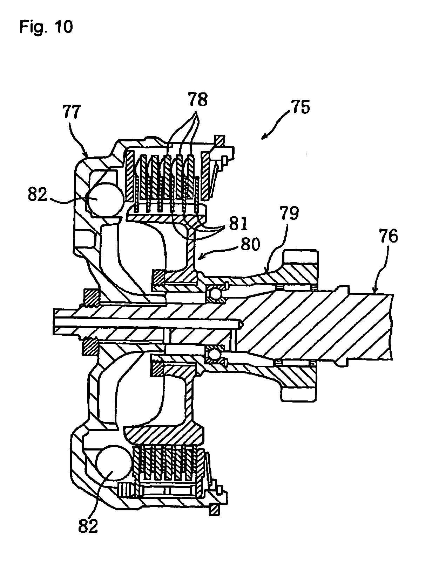

Fig. 10 shows a dry clutch 75 according to a second embodiment of the invention.

The dry clutch 75 according to the second embodiment includes an outer drum 77 fixed so as to rotate with an input shaft 76, a plurality of outer plates 78, which engage with the outer drum 77, an inner drum 80 fixed so as to rotate with an output shaft 79, a plurality of inner plates 81, which engage with the inner drum 80, and ball weight 82 being movable in a direction such that the outer plates 78 and the inner plates 81 are brought into pressure contact with each other by a centrifugal force generated by rotation of the input shaft 76. Thereby, rotation of the input shaft 76 is transmitted to the output shaft 79 through the outer plates 78 and the inner plates 81.

In the embodiment, a solid lubricant is interposed on contact surfaces between the outer plates 78 and the inner plates 81, that is, one of or both of a contact surface of the outer plates 78 and a contact surface of the inner plates 81.

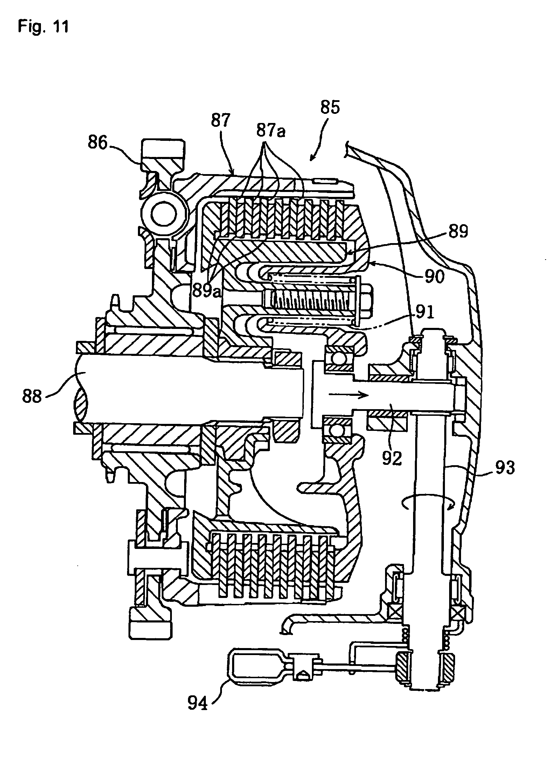

Fig. 11 shows a dry clutch 85 according to a third embodiment of the invention.

The dry clutch 85 according to the third embodiment includes an outer drum 87 fixed so as to rotate with a reduction gear 86, which meshes with a crank shaft (not shown), an inner drum 89 fixed so as to rotate with an output shaft 88, a plurality of outer plates 87a and inner plates 89a, which are interposed between the both drums 87, 89, and clutch springs 91, which axially bring the outer plates 87a and the inner plates 89a into pressure contact with each other through a push plate 90 at all times. Thereby, rotation of an engine is transmitted to the output shaft 88 through the outer drum 87 and the inner drum 89.

Also, a push rod 92 is connected to the push plate 90 and a drive shaft 93 inserted perpendicularly to an axis thereof meshes with the push rod 92. A clutch lever (not shown) of a steering handle is connected to the drive shaft 93 through a connecting lever 94. When a rider grips the clutch lever, the drive shaft 93 is turned and the push rod 92 is correspondingly moved in a direction, in which the clutch springs 91 are compressed. Thereby the outer plate 87a and the inner plate 89a are separated from each other to cut off transmission of engine rotation.

In the embodiment, a solid lubricant is interposed on contact surfaces between the outer plates 87a and the inner plates 89a, that is, one of or both of a contact surface of the outer plates 87a and a contact surface of the inner plates 89a.

In this manner, the substantially same effect as that in the first embodiment is produced in the dry clutches 75, 85 according to the second and third embodiments by interposing a solid lubricant on contact surfaces between the outer plates 78, 87a and the inner plates 81, 89a.

### Industrial Applicability

As described above, the invention is useful in a dry clutch, by which a transmitting member and a transmitted member are caused to contact with or separate from each other whereby motive power is transmitted or cut off, a transmitting member and a transmitted member, which constitute a part of the dry clutch, and a motorcycle provided with the dry clutch.

## Claims

1. A dry clutch (60; 75; 85) comprising a transmitting member (66; 78; 87a) and a transmitted member (62; 81; 89a), the transmitting member (66; 78; 87a) and the transmitted member (62; 81; 89a) being movable into contact with or to separate from each other in a non-lubricating atmosphere whereby motive power is transmitted or cut off, and
wherein a solid lubricant (70) is interposed between the transmitting member (66; 78; 87a) and the transmitted member (62; 81; 89a), and the transmitting member (66; 78; 87a) and the transmitted member (62; 81; 89a) each comprise a mutually contacting contact surface,
**characterized in that**
the solid lubricant (70) is rubbed against the contact surface of the transmitting member (66; 78; 87a) or the contact surface of the transmitted member (62; 81; 89a) whereby the solid lubricant (70) is interposed between the transmitting (66; 78; 87a) and transmitted (62; 81; 89a) members, and
the solid lubricant (70) contains a material contained in the transmitting member (66; 78; 87a) or the transmitted member (62; 81; 89a).

2. The dry clutch (60; 75; 85) according to claim 1, wherein the solid lubricant (70) is a solid lubricant (70) containing carbon or molybdenum.

3. The dry clutch (60; 75; 85) according to claim 2, wherein the solid lubricant (70) contains graphite.

4. The dry clutch (60; 75; 85) according to claim 2, wherein the solid lubricant (70) contains molybdenum disulfide.

5. The dry clutch (60; 75) according to any one of claims 1 to 4, further comprising an elastic body (67) that generates a spring force in a direction, in which the transmitting member (66; 78) and the transmitted member (62; 81) are separated from each other, and wherein the transmitting member (66; 78) and the transmitted member (62; 81) are arranged to be brought into contact with each other by a centrifugal force generated by rotation of the transmitting member (66; 78) and separated from each other by the spring force.

6. The dry clutch (85) according to any one of claims 1 to 4, further comprising an elastic body (91) that generates a spring force in a direction, in which the transmitting member (87a) and the transmitted member (89a) are brought into contact with each other, and wherein the transmitting member (87a) and the transmitted member (89a) are arranged to be brought into contact with each other by the spring force and separated from each other by a driving force from outside.

7. A motorcycle(1) provided with the dry clutch (60; 75; 85) according to any one of claims 1 to 6,
the motorcycle(1) comprising a dry type transmission and a transmission accommodating chamber (a), which accommodates the transmission, and the dry clutch (60; 75; 85) is arranged in the transmission accommodating chamber (a).

8. The motorcycle (1) according to claim 7, wherein the transmission comprises a V-belt continuously variable transmission (17) and the dry clutch (60; 75; 85) is arranged in the transmission accommodating chamber (a), in which the V-belt continuously variable transmission (17) is accommodated.

9. The motorcycle (1) according to claim 8, wherein the V-belt continuously variable transmission (17) comprises a drive pulley(40), a driven pulley (41), and a V-belt (42) wound round the drive pulley (40) and the driven pulley (41), and the dry clutch (60; 75; 85) is arranged on a side of the driven pulley (41).

10. A motorcycle(1) comprising an engine unit, which includes the dry clutch (60; 75; 85) according to any one of claims 1 to 6, and a body frame (2), and wherein the engine unit (8) comprises an engine body (8a), which generates an output, and a transmission case (8b), which accommodates a V-belt continuously variable transmission (17) for transmission of the output from the engine body (8a) to a rear wheel, the dry clutch (60; 75; 85) is accommodated in the transmission case (8b), and the engine body (8a) is supported on the body frame (2) to be able to swing vertically.

11. The motorcycle (1) according to claim 10, wherein the engine body (8a) is supported directly on the body frame (2) to be able to swing vertically.

12. A motorcycle (1) comprising an engine unit (8), which includes the dry clutch (60; 75; 85) according to any one of claims 1 to 6, and a body frame (2), and wherein the engine unit (8) is fixedly mounted on the body frame (2).

13. The dry clutch (60) according to any one of claims 1 to 4, wherein the transmitting member (66) comprises a shoe (66) mounted to a transmitting shaft (46) and movable by a centrifugal force generated by rotation of the transmitting shaft (46), whereby, in use, a surface of the shoe (66) is caused to abut against a casing (62) mounted to a transmitted shaft (44), and wherein the solid lubricant (70) is arranged on said surface of the shoe (66).

14. The dry clutch (60; 75; 85) according to any one of claims 1 to 4, and wherein the transmitted member (62; 81; 89a) comprises a casing (62), which is mounted to a transmitted shaft (44) and has a surface against which, in use, a shoe (66) mounted to a transmitting shaft (46) is caused to abut by a centrifugal force generated by rotation of the transmitting shaft (46), and wherein the solid lubricant(70) is arranged on said surface of the casing (62).

## Patentansprüche

1. Trockenkupplung (60; 75; 85), die ein Element (66; 78; 87a), von dem übertragen wird, und ein Element (62; 81; 89a), auf das übertragen wird, umfasst, wobei das Element (66; 78; 87a) von dem übertragen wird, und das Element (62; 81; 89a), auf das übertragen wird, in einer schmierungsfreien Umgebung bewegt werden können, um sie miteinander in Kontakt zu bringen oder voneinander zu trennen, so dass Bewegungskraft übertragen oder unterbrochen wird, und
ein Festschmierstoff (70) zwischen dem Element (66; 78; 87a), von dem übertragen wird, und dem Element (62; 81; 89a), auf das übertragen wird, angeordnet ist, und das Element (66; 78; 87a), von dem übertragen wird, sowie das Element (62; 81; 89a), auf das übertragen wird, jeweils eine in wechselseitigem Kontakt befindliche Kontaktfläche umfassen, **dadurch gekennzeichnet, dass**
der Festschmierstoff (70) an die Kontaktfläche des Elementes (66; 78; 87a), von dem übertragen wird, oder die Kontaktfläche des Elementes (62; 81; 89a), auf das übertragen wird, gerieben wird, so dass der Festschmierstoff (70) zwischen dem Element (66; 78; 87a), von dem übertragen wird, und dem Element (62; 81; 89a), auf das übertragen wird, angeordnet ist, und
der Festschmierstoff (70) ein Material enthält, das in dem Element (66; 78; 87a), von dem übertragen wird, oder dem Element (62; 81; 89a), auf das übertragen wird, enthalten ist.

2. Trockenkupplung (60; 75; 85) nach Anspruch 1, wobei der Festschmierstoff (70) ein Festschmierstoff (70) ist, der Kohlenstoff oder Molybdän enthält.

3. Trockenkupplung (60; 75; 85) nach Anspruch 2, wobei der Festschmierstoff (70) Graphit enthält.

4. Trockenkupplung (60; 75; 85) nach Anspruch 2, wobei der Festschmierstoff (70) Molybdändisulfid enthält.

5. Trockenkupplung (60; 75) nach einem der Ansprüche 1 bis 4, die des Weiteren einen elastischen Körper (67) umfasst, der eine Federkraft in einer Richtung erzeugt, in der das Element (66; 78), von dem übertragen wird, und das Element (62; 81), auf das übertragen wird, voneinander getrennt werden, und das Element (66; 78), von dem übertragen wird, und das Element (62; 81), auf das übertragen wird, so eingerichtet sind, dass sie durch eine Zentrifugalkraft, die durch Drehung des Elementes (66; 78), von dem übertragen wird, erzeugt wird, in Kontakt miteinander gebracht werden und durch die Federkraft voneinander getrennt werden.

6. Trockenkupplung (85) nach einem der Ansprüche 1 bis 4, die des Weiteren einen elastischen Körper (91) umfasst, der eine Federkraft in einer Richtung erzeugt, in der das Element (87a), von dem übertragen wird, und das Element (89a), auf das übertragen wird, in Kontakt miteinander gebracht werden, und wobei das Element (87a), von dem übertragen wird, und das Element (89a), auf das übertragen wird, so eingerichtet sind, dass sie durch die Federkraft in Kontakt miteinander gebracht werden und durch eine Antriebskraft von außen voneinander getrennt werden.

7. Motorrad (1), das mit der Trockenkupplung (60; 75; 85) nach einem der Ansprüche 1 bis 6 versehen ist,
wobei das Motorrad (1) ein Trockengetriebe sowie eine Getriebe-Aufnahmekammer (a) umfasst, die das Getriebe aufnimmt, und die Trockenkupplung (60; 75; 85) in der Getriebe-Aufnahmekammer (a) angeordnet ist.

8. Motorrad (1) nach Anspruch 7, wobei das Getriebe ein Keilriemengetriebe (17) umfasst und die Trockenkupplung (60; 75; 85) in der Getriebe-Aufnahmekammer (a) angeordnet ist, in der das Keilriemengetriebe (17) aufgenommen ist.

9. Motorrad (1) nach Anspruch 8, wobei das Keilriemengetriebe (17) eine antreibende Riemenscheibe (40), eine angetriebene Riemenscheibe (41) sowie einen Keilriemen (42) umfasst, der um die antreibende Riemenscheibe (40) und die angetriebene Riemenscheibe (41) herum läuft, und die Trockenkupplung (60; 75; 85) an einer Seite der angetriebenen Riemenscheibe (41) angeordnet ist.

10. Motorrad (1), das eine Motoreinheit, die die Trockenkupplung (60; 75; 85) nach einem der Ansprüche 1 bis 6 enthält, und einen Karosserierahmen (2) umfasst, wobei die Motoreinheit (8) einen Motorkörper (8a), der eine Ausgangsleistung erzeugt, sowie ein Getriebegehäuse (8b) umfasst, das ein Keilriemengetriebe (17) zum Übertragen der Ausgangsleistung von dem Motorkörper (8a) auf ein Hinterrad aufnimmt, die Trockenkupplung (60; 75; 85) in dem Getriebegehäuse (8b) aufgenommen ist und der Motorkörper (8a) so an dem Karosserierahmen (2) gelagert ist, dass er vertikal schwingen kann.

11. Motorrad (1) nach Anspruch 10, wobei der Motorkörper (8a) direkt an dem Karosserierahmen (2) so gelagert ist, dass er vertikal schwingen kann.

12. Motorrad (1), das eine Motoreinheit (8) umfasst, die die Trockenkupplung (60; 75; 85) nach einem der Ansprüche 1 bis 6 und einen Karosserierahmen (2) enthält, wobei die Motoreinheit (8) fest an dem Karosserierahmen (2) angebracht ist.

13. Trockenkupplung (60) nach einem der Ansprüche 1 bis 4, wobei das Element (66), von dem übertragen wird, eine Backe (66) umfasst, die an einer Welle (46) angebracht ist, von der übertragen wird, und mittels einer Zentrifugalkraft bewegt werden kann, die durch Drehung der Welle (46), von der übertragen wird, erzeugt wird, so dass in Funktion eine Oberfläche der Backe (66) veranlasst wird, an einer Verkleidung (62) anzuliegen, die an einer Welle (44), auf die übertragen wird, angebracht ist, und wobei der Festschmierstoff (70) an der Fläche der Backe (66) angeordnet ist.

14. Trockenkupplung (60; 75; 85) nach einem der Ansprüche 1 bis 4, wobei das Element (62; 81; 89a), auf das übertragen wird, eine Verkleidung (62) umfasst, die an einer Welle (44), auf die übertragen wird, angebracht ist und die eine Fläche hat, an der in Funktion eine Backe (66), die an einer Welle (46), von der übertragen wird, angebracht ist, durch eine Zentrifugalkraft zum Anliegen gebracht wird, die durch Drehung der Welle (46), von der übertragen wird, erzeugt wird, und wobei der Festschmierstoff (70) an der Fläche der Verkleidung (62) angeordnet ist.

## Revendications

1. Embrayage à sec (60 ; 75 ; 85) comprenant un élément transmetteur (66 ; 78 ; 87a) et un élément transmis (62 ; 81 ; 89a), l'élément transmetteur (66 ; 78 ; 87a) et l'élément transmis (62 ; 81 ; 89a) étant mobile pour venir au contact ou se séparer l'un de l'autre dans une atmosphère non-lubrifiante, grâce à quoi une puissance motrice est transmise ou coupée, et
- dans lequel un lubrifiant solide (70) est interposé entre l'élément transmetteur (66 ; 78 ; 87a) et l'élément transmis (62 ; 81 ; 89a), et l'élément transmetteur (66 ; 78 ; 87a) et l'élément transmis (62 ; 81 ; 89a) comprennent chacun une surface de contact venant mutuellement en contact,
- **caractérisé en ce que** :
- le lubrifiant solide (70) est fait adhérer contre la surface de contact de l'élément transmetteur (66 ; 78 ; 87a) ou la surface de contact de l'élément transmis (62 ; 81 ; 89a), grâce à quoi le lubrifiant solide (70) est interposé entre les éléments transmetteur (66 ; 78 ; 87a) et transmis (62 ; 81 ; 89a), et
- le lubrifiant solide (70) contient un matériau contenu dans l'élément transmetteur (66 ; 78 ; 87a) ou l'élément transmis (62 ; 81 ; 89a).

2. Embrayage à sec (60 ; 75 ; 85) selon la revendication 1, dans lequel le lubrifiant solide (70) est un lubrifiant solide (70) contenant du carbone ou du molybdène.

3. Embrayage à sec (60 ; 75 ; 85) selon la revendication 2, dans lequel le lubrifiant solide (70) contient du graphite.

4. Embrayage à sec (60 ; 75 ; 85) selon la revendication 2, dans lequel le lubrifiant solide (70) contient du disulfure de molybdène.

5. Embrayage à sec (60 ; 75 ; 85) selon l'une quelconque des revendications 1 à 4, comprenant en outre un corps élastique (67) générant une force d'élasticité dans une direction, dans laquelle l'élément transmetteur (66 ; 78) et l'élément transmis (62 ; 81) sont séparés l'un de l'autre et dans laquelle l'élément transmetteur (66 ; 78) et l'élément transmis (62 ; 81) sont agencés pour être amenés au contact l'un de l'autre par une force centrifuge générée par une rotation de l'élément transmetteur (66 ; 78) et séparés l'un de l'autre par la force d'élasticité.

6. Embrayage à sec (60 ; 75 ; 85) selon l'une quelconque des revendications 1 à 4, comprenant en outre un corps élastique (67) générant une force d'élasticité dans une direction, dans laquelle l'élément transmetteur (66 ; 78) et l'élément transmis (62 ; 81) sont amenés au contact l'un de l'autre et dans laquelle l'élément transmetteur (66 ; 78) et l'élément transmis (62 ; 81) sont agencés pour être amenés au contact l'un de l'autre par la force d'élasticité et séparés l'un de l'autre par une force d'entrainement provenant de l'extérieur.

7. Motocyclette (1) pourvue d'un embrayage à sec (60 ; 75 ; 85) selon l'une quelconque des revendications 1 à 6,
- la motocyclette (1) comprenant une transmission de type à sec et une chambre de logement de transmission (a) logeant la transmission et l'embrayage à sec (60 ; 75 ; 85) est agencé dans la chambre logeant la transmission (a).

8. Motocyclette (1) selon la revendication 7, dans laquelle la transmission comprend une transmission variable en continu à courroie en V (17) et l'embrayage à sec (60 ; 75 ; 85) est agencé dans la chambre logeant la transmission (a) dans laquelle la transmission variable en continu à courroie en V (17) est logée.

9. Motocyclette (1) selon la revendication 8, dans laquelle la transmission variable en continu à courroie en V (17) comprend une poulie d'entrainement (40), une poulie entrainée (41) et une courroie en V (42) enroulée autour de la poulie d'entrainement (40) et de la poulie entrainée (41) et l'embrayage à sec (60 ; 75 ; 85) est agencé sur un côté de la poulie entrainée (41).

10. Motocyclette (1) comprenant une unité de moteur, incluant l'embrayage à sec (60 ; 75 ; 85) selon l'une quelconque des revendications 1 à 6, et un cadre (2) et dans laquelle l'unité de moteur (8) comprend un corps de moteur (8a) générant une sortie et une enveloppe de transmission (8b) logeant une transmission variable en continu à courroie en V (17) pour une transmission de la sortie du corps de moteur (8a) à une roue arrière, l'embrayage à sec (60 ; 75 ; 85) est logé dans l'enveloppe de transmission (8b) et le corps de moteur (8a) est supporté sur le cadre (2) pour être susceptible d'osciller verticalement.

11. Motocyclette (1) selon la revendication 10, dans laquelle le corps de moteur (8a) est supporté directement sur le cadre (2) pour être susceptible d'osciller verticalement.

12. Motocyclette (1) comprenant une unité de moteur (8), incluant l'embrayage à sec (60 ; 75; 85) selon l'une quelconque des revendications 1 à 6, et un cadre (2) et dans laquelle l'unité de moteur (8) est montée de façon fixe sur le cadre (2).

13. Embrayage à sec (60) selon l'une quelconque des revendications 1 à 4, dans lequel l'élément de transmission (66) comprend un sabot (66) monté sur un arbre de transmission (46) et mobile par une force centrifuge générée par une rotation de l'arbre de transmission (46), grâce à quoi, à l'utilisation, une surface du sabot (66) est faite venir en butée contre une enveloppe (62) montée sur un arbre transmis (44) et dans laquelle le lubrifiant solide (70) est agencé sur ladite surface du sabot (66).

14. Embrayage à sec (60 ; 75 ; 85) selon l'une quelconque des revendications 1 à 4 et dans lequel l'élément transmis (62 ; 81, 89a) comprend une enveloppe (62) montée sur un arbre transmis (44) et comporte une surface contre laquelle, à l'utilisation, un sabot (66) monté sur un arbre de transmission (46) est fait venir en butée par une force centrifuge générée par une rotation de l'arbre de transmission (46), et dans laquelle le lubrifiant solide (70) est agencé sur ladite surface de l'enveloppe (62).
